(19) Europäisches Patentamt
European Patent Office
Office européen des brevets

(11) **EP 3 835 751 A1**

(12) **EUROPÄISCHE PATENTANMELDUNG**

(43) Veröffentlichungstag:
**16.06.2021 Patentblatt 2021/24**

(51) Int Cl.:
*G01N 9/26* (2006.01)   *G01F 1/66* (2006.01)

(21) Anmeldenummer: **19215079.5**

(22) Anmeldetag: **11.12.2019**

| | |
|---|---|
| (84) Benannte Vertragsstaaten:<br>**AL AT BE BG CH CY CZ DE DK EE ES FI FR GB GR HR HU IE IS IT LI LT LU LV MC MK MT NL NO PL PT RO RS SE SI SK SM TR**<br>Benannte Erstreckungsstaaten:<br>**BA ME**<br>**KH MA MD TN** | (72) Erfinder: **KÜNZELMANN, Mario**<br>**01187 Dresden (DE)**<br><br>(74) Vertreter: **Manitz Finsterwald**<br>**Patent- und Rechtsanwaltspartnerschaft mbB**<br>**Martin-Greif-Strasse 1**<br>**80336 München (DE)** |
| (71) Anmelder: **SICK Engineering GmbH**<br>**01458 Ottendorf-Okrilla (DE)** | |

(54) **VERFAHREN UND MESSANORDNUNGEN ZUM BESTIMMEN DER DICHTE UND DES MASSENSTROMS EINES IN EINER ROHRLEITUNG STRÖMENDEN FLUIDS**

(57)    Die vorliegende Erfindung betrifft ein Verfahren zum Bestimmen der Dichte eines in einer Rohrleitung strömenden Fluids, wobei an zumindest zwei verschiedenen Messstellen ein jeweiliger Druck in der Rohrleitung gemessen wird, wobei die Messstellen derart mit einem Abstand voneinander in der Rohrleitung angeordnet sind, dass sich ein an einer der Messstellen wirksamer Schweredruck und ein an einer anderen Messstelle wirksamer Schweredruck entsprechend einer Höhendifferenz zwischen den genannten zwei Messstellen voneinander unterscheiden, aus den beiden gemessenen Drücken ein hydrostatischer Differenzdruck ermittelt wird, und die Dichte des Fluids auf der Grundlage des ermittelten Differenzdrucks, der im Bereich der Messstellen wirksamen Erdbeschleunigung und der Höhendifferenz zwischen den genannten zwei Messstellen ermittelt wird. Die Erfindung betrifft ferner ein Verfahren zum Bestimmen des Massenstroms eines in einer Rohrleitung strömenden Fluids, wobei Laufzeiten von mit und gegen die Strömung auf wenigstens einem Messpfad ausgesandten und empfangenen Ultraschallsignalen ermittelt werden, wobei auf der Grundlage der Laufzeiten die Strömungsgeschwindigkeit des Fluids ermittelt wird, wobei gemäß dem vorstehend genannten erfindungsgemäßen Verfahren die Dichte des Fluids ermittelt wird, und wobei auf der Grundlage der Strömungsgeschwindigkeit, der Dichte und der Querschnittsfläche der Rohrleitung der Massenstrom ermittelt wird. Die Erfindung betrifft weiterhin entsprechende Messanordnungen.

EP 3 835 751 A1

## Beschreibung

Die vorliegende Erfindung betrifft ein Verfahren und eine Dichtemessanordnung zum Bestimmen der Dichte eines in einer Rohrleitung strömenden Fluids. Die Erfindung betrifft ferner ein Verfahren und eine Massenstrommessanordnung zum Bestimmen des Massenstroms eines in einer Rohrleitung strömenden Fluids.

Strömungsgeschwindigkeiten von strömenden Fluiden in Rohrleitungen oder Kanälen können mittels Ultraschallmesstechnik nach dem Differenzlaufzeitverfahren ermittelt werden. Eine entsprechende Ultraschallmessvorrichtung und ein entsprechendes Verfahren sind beispielsweise in DE 10 2016 112 295 A1 beschrieben, deren Inhalt durch Bezugnahme vollständig in die vorliegende Anmeldung aufgenommen wird.

Auf der Grundlage der Strömungsgeschwindigkeit und der Querschnittsfläche der Rohrleitung oder des Kanals kann der Volumenstrom des durch die Rohrleitung strömenden Fluids ermittelt werden. Derartige Volumenstrommessvorrichtungen werden häufig in Form von Zählern eingesetzt, um Liefer- und/oder Verbrauchsmengen von Gasen oder Flüssigkeiten zu ermitteln. Da eine Erfassung oder Abrechnung der gelieferten oder durchgeleiteten Fluidmengen in der Regel aber nicht nach Volumen, sondern nach Masse erfolgt, kann eine Umrechnung eines gemessenen Volumenstroms in einen Massenstrom unter Berücksichtigung der Dichte erfolgen. Eine Schwierigkeit besteht jedoch darin, dass die Dichte eines in der Rohrleitung strömenden Fluids von verschiedenen Parametern abhängt, beispielsweise vom Betriebsdruck der Rohrleitung und der Temperatur des Fluids, so dass die Dichte in der Regel Schwankungen unterliegt. Auch über die Zeit variierende Zusammensetzungen von Fluidgemischen können Einfluss auf die Dichte haben. Die für eine Umrechnung eines Volumenstroms in einen Massenstrom erforderlichen Dichtewerte können aus entsprechenden Tabellenwerken ermittelt werden, wobei etwaige Dichteänderungen aufgrund sich verändernder Umgebungsparameter (Betriebsdruck, Temperatur) indirekt überwacht werden können, wobei allerdings für jeden Parameter eine entsprechende zusätzliche Messeinrichtung erforderlich ist. In jedem Fall ist bei der Einrichtung einer entsprechenden Messvorrichtung zumindest zum Einstellen eines (Norm-)Dichtewerts die Mitwirkung eines Benutzers erforderlich, was einen entsprechenden Zeitaufwand bedeutet und die Gefahr von fehlerhaften Eingaben oder Kalibriervorgängen mit sich bringt.

Es ist daher die Aufgabe der Erfindung, ein Verfahren und eine Messanordnung anzugeben, welche eine unmittelbare Bestimmung der Dichte eines in einer Rohrleitung strömenden Fluids ermöglichen. Eine weitere Aufgabe der Erfindung besteht darin, ein verbessertes Verfahren und eine verbesserte Messanordnung zum Bestimmen des Massenstroms eines in einer Rohrleitung strömenden Fluids anzugeben.

Die Lösung der Aufgabe erfolgt durch Verfahren mit den Merkmalen des Anspruchs 1 bzw. mit den Merkmalen des Anspruchs 13 und durch Messanordnungen mit den Merkmalen des Anspruchs 6 bzw. des Anspruchs 14.

Ein Aspekt der Erfindung betrifft ein Verfahren zum Bestimmen der Dichte eines in einer Rohrleitung strömenden Fluids, wobei an zumindest zwei verschiedenen Messstellen ein jeweiliger Druck in der Rohrleitung gemessen wird, wobei die Messstellen derart mit einem Abstand voneinander in der Rohrleitung angeordnet sind, dass sich ein an einer der Messstellen wirksamer Schweredruck und ein an einer anderen Messstelle wirksamer Schweredruck entsprechend einer Höhendifferenz zwischen den genannten zwei Messstellen voneinander unterscheiden, aus den beiden gemessenen Drücken ein hydrostatischer Differenzdruck ermittelt wird, und die Dichte des Fluids auf der Grundlage des ermittelten Differenzdrucks, der im Bereich der Messstellen wirksamen Erdbeschleunigung und der Höhendifferenz zwischen den genannten zwei Messstellen ermittelt wird.

Der Schweredruck ist hierbei der Druck, der sich innerhalb des Fluids durch den Einfluss der Gravitation einstellt. Die genannte Höhendifferenz ist insbesondere die in der Wirkrichtung des Schwerefelds der Erde verlaufende Komponente des Abstands der genannten zwei Messstellen. Die den Schweredruck erzeugende Gravitation der Erde ist bekannt und wird durch die Erdbeschleunigung g beschrieben. Der Wert der Erdbeschleunigung beträgt auf Normalhöhe $9,81 \text{ m/s}^2$. Für Abweichungen von der Normalhöhe bei der Durchführung des Verfahrens können gegebenenfalls Korrekturfaktoren berücksichtigt werden.

Die Dichte ρ des Fluids kann insbesondere unter Verwendung der Gleichung $\rho = \dfrac{p}{g \cdot h}$ ermittelt werden, wobei ρ der genannte hydrostatische Differenzdruck, g die im Bereich der Messstellen wirksame Erdbeschleunigung und h die genannte Höhendifferenz ist.

Das erfindungsgemäße Verfahren weist den Vorteil auf, dass die Dichte dynamisch und auch weitgehend unabhängig von der Strömungsgeschwindigkeit des Fluids ermittelt werden kann. Auch wenn das erfindungsgemäße Verfahren für die Dichtebestimmung in strömenden Fluiden konzipiert und geeignet ist, versagt es auch nicht bei einem Stillstand des Fluids in der Rohrleitung. Dichteänderungen aufgrund von Temperatur- und/oder Betriebsdruckänderungen wirken sich unmittelbar auf das Messergebnis aus und werden inhärent berücksichtigt und müssen nicht mit Hilfe separater Sensorik erfasst werden.

Das Fluid kann eine Flüssigkeit oder ein Gas, insbesondere ein komprimiertes Gas sein. Hierzu ist anzumerken, dass bei Gasen der hydrostatische Differenzdruck im Vergleich zu Flüssigkeiten deutlich geringer ist. Dies kann dadurch berücksichtigt werden, dass Drucksensoren mit einer entsprechend hohen Messgenauigkeit eingesetzt werden und/oder die Höhendifferenz zwischen den zwei Messstellen vergrößert wird, was beispielsweise durch eine Vergrößerung des Querschnitts der Rohrleitung zumindest im Bereich der Druckbestimmung erreicht werden kann.

Gemäß einer vorteilhaften Ausgestaltung des Verfahrens ist jede Messstelle an einer Wandungsfläche der Rohrleitung vorgesehen. Dies stellt eine konstruktiv einfache Lösung dar.

Gemäß einer weiteren vorteilhaften Ausgestaltung des Verfahrens erfolgen die Messungen der Drücke an den genannten zwei Messstellen derart, dass diejenigen Druckkomponenten der gemessenen Drücke, die auf den Betriebsdruck und ggf. den dynamischen Druck in dem Fluid zurückzuführen sind, an allen Messstellen zumindest gleich groß und bevorzugt gleich Null sind. Der in einem strömenden Fluid messbare Druck setzt sich aus verschiedenen Druckkomponenten zusammen, wobei hier zwischen statischen Komponenten, die nicht von der Strömung beeinflusst werden, und dynamischen Komponenten unterschieden wird, die auf die Fluidströmung zurückzuführen sind. Die statische Druckkomponente setzt sich aus dem eingangs genannten Schweredruck und dem Betriebsdruck zusammen, wobei der Betriebsdruck derjenige Anteil am statischen Druck ist, der nicht aus dem Eigengewicht des Fluids resultiert. Der Betriebsdruck kann beispielsweise auf einen extern erzeugten Überdruck (z.B. Pumpendruck) zurückzuführen sein. Bei der dynamischen Druckkomponente handelt es sich insbesondere um den Staudruck, der bei einem Anströmen eines Hindernisses entsteht. Um Fehlmessungen zu vermeiden, soll gemäß dem Verfahren ausschließlich der hydrostatische Differenzdruck als Differenz der Schweredrücke zwischen den beiden genannten Messstellen ermittelt werden. Dafür muss bei der Anordnung und Ausgestaltung der zur Druckmessung verwendeten Drucksensoren sichergestellt werden, dass sich die an den Messstellen erfassten Betriebsdruckkomponenten und dynamischen Druckkomponenten nicht miterfasst werden oder sich diese gegenseitig aufheben. Dies kann beispielsweise durch gleichartige Drucksensoren und gleichartige Einbauanordnungen (Anordnung von Messöffnungen oder Messstutzen in oder an der Rohrleitung) erreicht werden.

Vorteilhafterweise wird versucht, die Messstellen so anzuordnen, dass die Drucksensoren nicht von dem strömenden Fluid angeströmt werden und somit auch kein Staudruck entsteht. Hierfür kann die Rohrleitung mit einer sogenannten Wanddruckbohrung versehen werden, d.h. einer senkrecht zur Strömungsrichtung des Fluids angeordneten Bohrung. Eine Maßnahme, um den Einfluss von Unterschieden im Betriebsdruck zu minimieren, kann darin bestehen, dass die Messstellen zur Vermeidung von reibungsbedingten Druckabfällen in einer Strömungsrichtung des Fluids betrachtet möglichst nahe beieinanderliegen und die Querschnittsfläche der Rohrleitung in diesem Bereich konstant ist, um entsprechende Druckänderungen zu vermeiden.

Gemäß einer weiteren vorteilhaften Ausgestaltung wird die Höhendifferenz zwischen den genannten zwei Messstellen auf der Grundlage der Neigung der Rohrleitung ermittelt. In diesem Zusammenhang ist die Neigung der Rohrleitung deren Neigung im Bereich der Messstellen während der Durchführung des Verfahrens. Hierbei wird berücksichtigt, dass die Rohrleitung in unterschiedlichen Lagen betrieben werden kann. Die Neigung der Rohrleitung kann zum Beispiel bezogen auf eine Referenzrichtung oder eine Referenzebene angegeben werden, beispielsweise bezogen auf die Wirkrichtung des Schwerefelds oder die Erdoberfläche. Die Höhendifferenz kann somit geometrisch, beispielsweise als Funktion des Neigungswinkels und des Abstands der genannten zwei Messstellen bestimmt werden. Die Neigung kann beispielsweise durch einen Benutzer eingegeben werden oder mittels eines Neigungssensors erfasst werden. Mit anderen Worten wird die Einbaulage der Rohrleitung bei der Ermittlung der Dichte berücksichtigt und kann beispielsweise als zusätzlicher Parameter an eine Auswerteeinheit, welche zur Durchführung des Verfahrens eingerichtet ist, übermittelt werden.

In dem Zusammenhang hat es sich als vorteilhaft erwiesen, wenn die Höhendifferenz zwischen den genannten zwei Messstellen ferner auf der Grundlage der für eine Referenzneigung der Rohrleitung ermittelten Referenzhöhendifferenz und einer Winkeldifferenz zwischen der Referenzneigung und der tatsächlichen Neigung der Rohrleitung ermittelt wird. Es versteht sich, dass für die genannten Neigungen jeweils die gleiche Bezugsrichtung gelten muss, beispielsweise die Wirkrichtung des Schwerefelds. Für eine waagrecht verlaufende Rohrleitung (entsprechend einer Referenzneigung von 90° bezogen auf die Wirkrichtung des Schwerefelds) mit einem kreisförmigen Rohrquerschnitt und einer einander gegenüberliegenden Anordnung der Messstellen an der Rohrwandung kann die Referenzhöhendifferenz $h_0$ beispielsweise einem Durchmesser D der Rohrleitung entsprechen. Die tatsächliche Höhendifferenz h kann in diesem Fall zum Beispiel für eine Winkeldifferenz $\Delta$ zwischen dem Referenzneigungswinkel (hier 90°) und einem tatsächlichen Neigungswinkel $\alpha$ (ebenfalls bezogen auf die Wirkrichtung des Schwerefelds) gemäß der Gleichung $h = h_0 \cos \Delta$ ($= D \cos \Delta$) bzw. im konkreten Beispiel auch direkt für den tatsächlichen Neigungswinkel $\alpha$ (bezogen auf die Wirkrichtung des Schwerefelds) gemäß der Gleichung $h = h_0 \sin \alpha$ ermittelt werden.

Ein weiterer Aspekt der Erfindung betrifft eine Dichtemessanordnung zum Bestimmen der Dichte eines in einer Rohrleitung strömenden Fluids mit zumindest zwei an verschiedenen Messstellen angeordneten Drucksensoren zur Druckmessung in der Rohrleitung, wobei die Messstellen derart mit einem Abstand voneinander in der Rohrleitung vorgesehen sind, dass sich ein an einer der Messstellen wirksamer Schweredruck und ein an einer anderen Messstelle wirksamer Schweredruck entsprechend einer Höhendifferenz voneinander unterscheiden, welche der in Wirkrichtung der Erdbeschleunigung verlaufenden Komponente des Abstands der genannten zwei Messstellen voneinander entspricht. Die Dichtemessanordnung umfasst weiterhin eine mit den Drucksensoren verbundene Drucksensoren-Auswerteeinheit, welche dazu eingerichtet ist, die von den Drucksensoren an den beiden genannten Messstellen gemessenen Drücke zu empfangen, aus diesen Drücken einen hydrostatischen Differenzdruck zu ermitteln und die Dichte des Fluids auf der Grundlage des ermittelten Differenzdrucks, der im Bereich der Messstellen wirksamen Erdbeschleunigung und der Höhendifferenz zwischen den genannten zwei Messstellen zu ermitteln.

Das Merkmal, wonach ein Drucksensor an einer Messstelle angeordnet ist, ist in diesem Zusammenhang so zu verstehen, dass der Drucksensor den an dieser Messstelle wirksamen Druck erfassen kann. Wie vorstehend bereits erläutert wurde, muss bei der Ermittlung der Dichte nicht alleine nur der geometrische Abstand der Messstellen berücksichtigt werden, sondern zusätzlich auch die Betriebslage der Rohrleitung. Die Ermittlung der genannten Höhendifferenz auf der Grundlage der in Richtung des Schwerefelds der Erde verlaufenden Komponente des Abstands muss gegebenenfalls unter Einbeziehung einer Neigung der Rohrleitung erfolgen.

Gemäß einer vorteilhaften Ausführungsform umfasst die Dichtemessanordnung drei an verschiedenen Messstellen angeordnete Drucksensoren zur Druckmessung in der Rohrleitung, wobei die Messstellen derart gewählt sind, dass für jede beliebige Neigung der Rohrleitung bezogen auf die Wirkrichtung des Schwerefelds der Erde für wenigstens ein mögliches Paar von Messstellen deren Höhendifferenz ungleich Null ist. Beispielsweise kann eine Dichtemessanordnung mit nur zwei Messstellen, die einander derart gegenüberliegend angeordnet sind, dass deren Abstand bzw. wirksame Höhendifferenz bei waagrechter Anordnung der Rohrleitung maximal ist, in vertikaler Einbaulage nicht mehr betrieben werden, da die Höhendifferenz und somit auch der hydrostatische Differenzdruck hier Null wird. In dem Fall kann durch eine zusätzliche dritte Messstelle erreicht werden, dass für diese dritte Messstelle in Kombination mit einer der anderen beiden Messstellen die Höhendifferenz ungleich Null ist. Eine entsprechende Anordnung ist also nicht auf eine Einbaulage beschränkt.

In dem Zusammenhang hat es sich als vorteilhaft erwiesen, wenn die Bestimmung der Dichte nur auf der Grundlage derjenigen Drücke durchgeführt wird, die an demjenigen Paar von Messstellen ermittelt wurden, welches die größte Höhendifferenz aufweist. Aus den drei Messstellen werden somit diejenigen zwei Messstellen ausgewählt, welche entsprechend der Neigung der Rohrleitung die größte Höhendifferenz besitzen. Durch die Maximierung der Höhendifferenz wird die Genauigkeit der Dichtebestimmung verbessert.

Gemäß einer weiteren vorteilhaften Ausführungsform der Dichtemessanordnung ist vorgesehen, dass die Position einer jeden Messstelle in der Rohrleitung zumindest durch eine Axialposition und eine Polarposition bezogen auf eine (der Richtung der Rohrleitung entsprechende) Längsachse, insbesondere die Längsmittelachachse, der Rohrleitung definiert ist, und dass die Dichtemessanordnung einen ersten und einen zweiten Drucksensor umfasst, wobei vorteilhafterweise die Axialpositionen der Messstellen des ersten und zweiten Drucksensors gleich sind und die Polarpositionen der Messstellen des ersten und zweiten Drucksensors derart gewählt sind, dass deren Abstand maximal ist. Die Positionen der Messstellen in der Rohrleitung werden zweckmäßigerweise in einem Zylinderkoordinatensystem mit der genannten Längsachse als z- oder Bezugsachse und einem auf der Längsachse liegenden Bezugspunkt oder Ursprung beschrieben, wobei die Axialpositionen in Koordinaten der z- oder Bezugsachse und die Polarpositionen in Polarkoordinaten, d.h. in Abstands- und Winkelkoordinaten, mit dem Bezugspunkt oder Ursprung als Pol und einem wählbaren Strahl als Polarachse angegeben werden. Für die Definition der Messstellenpositionen wird angenommen, dass die Rohrleitung zumindest im Bereich der Messstellen gerade ist. Demgemäß liegen die Messstellen des ersten und zweiten Drucksensors vorteilhafterweise einander diametral gegenüber, und zwar am oberen und unteren Scheitel der Rohrleitung.

Dabei wird der Fachmann ohne Weiteres erkennen, dass zum Erreichen einer größtmöglichen Höhendifferenz und damit einer größtmöglichen Messgenauigkeit auch eine sinnvolle Ausrichtung der Rohrleitung bezüglich einer Rotation um die Längsachse erforderlich ist. Hierzu wird der Fachmann bestrebt sein, die Rohrleitung bezüglich ihrer Ausrichtung bezogen auf ihre Längsachse so zu wählen, dass eine jeweilige Horizontalkomponente (d.h. die senkrecht zur Wirkrichtung des Erdschwerefelds verlaufende Komponente) des oder der Abstände der Messstellen minimal wird. Da für einen maximalen Abstand der Messstellen diese bevorzugt auf einer Umfangsfläche der Rohrleitung angeordnet werden, sind die jeweiligen Abstandskoordinaten der Polarpositionen durch diese Bedingung im Prinzip schon vorgegeben. Die Winkelkoordinaten werden dann in geeigneter Weise gewählt, um den Abstand zu maximieren, wofür in der Regel die Differenz der Winkelkoordinaten 180° betragen sollte.

Gemäß einer vorteilhaften Ausführungsform umfasst die Dichtemessanordnung ferner einen dritten Drucksensor, wobei die Axialposition der Messstelle des dritten Drucksensors von der Axialposition der Messstellen des ersten und zweiten Drucksensors verschieden ist und die Polarposition der Messstelle des dritten Drucksensors gleich der Polarposition der Messstelle des ersten oder des zweiten Drucksensors ist. Mit anderen Worten verläuft eine der beiden gedachten Verbindungslinien zwischen den Messstellen des ersten und dritten Drucksensors bzw. zwischen den Messstellen des zweiten und dritten Drucksensors parallel zu der Längsachse der Rohrleitung. Eine derartige Dichtemessanordnung kann auch bei stärker geneigten oder sogar vertikal verlaufenden Rohrleitungen eingesetzt werden, wobei die wirksame Höhendifferenz geometrisch einfach bestimmbar ist.

In dem Zusammenhang hat es sich als vorteilhaft erwiesen, wenn der axiale Abstand zwischen der Axialposition der Messstelle des dritten Drucksensors und der Axialposition der Messstellen des ersten und zweiten Drucksensors gleich dem Abstand der Messstellen des ersten und zweiten Drucksensors ist. Hierdurch wird die Ermittlung der Höhendifferenz noch weiter vereinfacht.

Die Drucksensoren-Auswerteeinheit der Dichtemessanordnung ist insbesondere zur Durchführung des vorstehend beschriebenen Verfahrens eingerichtet.

Ein weiterer Aspekt der Erfindung betrifft ein Verfahren zum Bestimmen des Massenstroms eines in einer Rohrleitung strömenden Fluids, wobei Laufzeiten von mit und gegen die Strömung auf wenigstens einem Messpfad ausgesandten und empfangenen Ultraschallsignalen ermittelt werden, wobei auf der Grundlage der Laufzeiten die Strömungsgeschwindigkeit des Fluids ermittelt wird, wobei gemäß dem vorstehend beschriebenen erfindungsgemäßen Verfahren oder einer seiner vorteilhaften Ausgestaltungen die Dichte des Fluids ermittelt wird, und wobei auf der Grundlage der Strömungsgeschwindigkeit, der Dichte und der Querschnittsfläche der Rohrleitung der Massenstrom ermittelt wird. Die Ermittlung einer Strömungsgeschwindigkeit auf der Grundlage der Laufzeiten von Ultraschallsignalen ist allgemein bekannt und wurde eingangs bereits erläutert. Auf der Grundlage der auf diese Weise ermittelten Strömungsgeschwindigkeit und unter Einbeziehung der erfindungsgemäß ermittelten Dichte des Fluids und der Querschnittsfläche der Rohrleitung kann auf diese Weise einfach und zuverlässig der Massenstrom, d.h. die Masse einer pro Zeiteinheit durch die Rohrleitung strömenden Fluidmenge, ermittelt werden. Um Fehlmessungen zu vermeiden, werden vorteilhafterweise die Druckmessung für die Dichteermittlung und die Laufzeitmessung räumlich möglichst nahe beieinander durchgeführt. Vorzugsweise ist die Querschnittsfläche der Rohrleitung in beiden Bereichen gleich groß. Falls dies nicht möglich sein sollte, können durch Querschnittsveränderungen im Bereich der Messungen verursachte Änderungen der Strömungsverhältnisse, insbesondere der Strömungsgeschwindigkeit und/oder der Dichte, durch entsprechende Korrekturfaktoren berücksichtigt werden.

Insbesondere kann ein Massenstrom M unter Verwendung der Gleichung $M = c \cdot A \cdot \rho$ ermittelt werden, wobei c die Strömungsgeschwindigkeit des Fluids ist, A die Querschnittsfläche der Rohrleitung im Bereich der Dichtebestimmung bzw. der Strömungsgeschwindigkeitsbestimmung ist und $\rho$ die Dichte des Fluids ist.

Ein weiterer Aspekt der Erfindung betrifft eine Massenstrommessanordnung zum Bestimmen des Massenstroms eines in einer Rohrleitung strömenden Fluids, mit einer Dichtemessanordnung gemäß einer der vorstehend beschriebenen erfindungsgemäßen Ausführungsformen oder vorteilhaften Ausführungsformen davon, mit zumindest einer Ultraschallmessanordnung mit einem Paar von Ultraschallwandlern, welche zum Aussenden und Empfängen von Ultraschallsignalen eingerichtet sind und zwischen denen ein Messpfad aufgespannt ist, mit einer Ultraschallwandler-Auswerteeinheit, welche dazu eingerichtet ist, Laufzeiten von mit und gegen die Strömung auf dem Messpfad ausgesandten und empfangenen Ultraschallsignalen zu ermitteln und auf der Grundlage der Laufzeiten die Strömungsgeschwindigkeit des Fluids zu ermitteln,

- wobei die Drucksensoren-Auswerteeinheit dazu eingerichtet ist, die ermittelte Strömungsgeschwindigkeit von der Ultraschallwandler-Auswerteeinheit zu empfangen und auf der Grundlage der Strömungsgeschwindigkeit, der Dichte und der Querschnittsfläche der Rohrleitung den Massenstrom zu ermitteln, oder

- wobei die Ultraschallwandler-Auswerteeinheit dazu eingerichtet ist, die ermittelte Dichte von der Drucksensoren-Auswerteeinheit zu empfangen und auf der Grundlage der Strömungsgeschwindigkeit, der Dichte und der Querschnittsfläche der Rohrleitung den Massenstrom zu ermitteln.

Gemäß einer vorteilhaften Ausführungsform der Massenstrommessanordnung ist vorgesehen, dass die Ultraschallwandler-Auswerteeinheit und die Drucksensoren-Auswerteeinheit in einer gemeinsamen Auswerteeinheit kombiniert sind. Dann ist nur eine Auswerteeinheit vorgesehen, welche die vorstehend beschriebenen Funktionalitäten der Ultraschallwandler-Auswerteeinheit und der Drucksensoren-Auswerteeinheit in sich vereint.

Weitere vorteilhafte Ausgestaltungen der erfindungsgemäßen Verfahren und der erfindungsgemäßen Messanordnungen ergeben sich aus den Unteransprüchen, der Beschreibung und den Zeichnungen.

Die Erfindung wird nachfolgend anhand eines Ausführungsbeispiels mit Bezug auf die Zeichnungen beschrieben. Es zeigen:

Fig. 1    eine schematische Darstellung einer Dichtemessanordnung in seitlicher Schnittansicht gemäß einem ersten Ausführungsbeispiel, und

Fig. 2    eine schematische Darstellung einer Dichtemessanordnung in seitlicher Schnittansicht gemäß einem zweiten Ausführungsbeispiel.

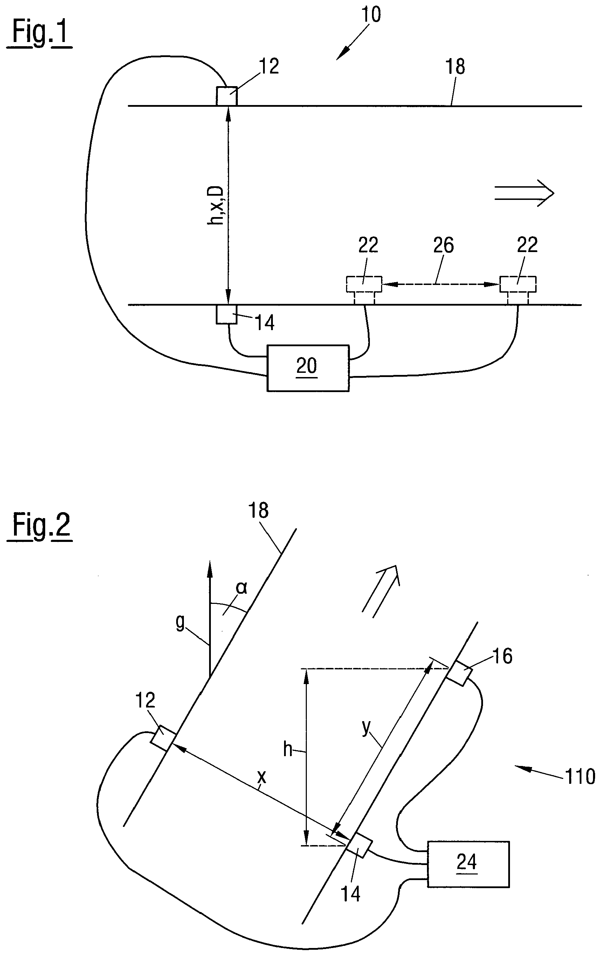

Fig. 1 zeigt eine Dichtemessanordnung 10 zum Bestimmen der Dichte eines in einer Rohrleitung 18 strömenden Fluids. Die Strömungsrichtung des Fluids ist durch einen dicken Pfeil gekennzeichnet, wobei das Fluid grundsätzlich auch in der entgegengesetzten Richtung strömen könnte. Die Rohrleitung 18 verläuft hier in horizontaler Richtung, d.h. senkrecht zu der Wirkrichtung des Schwerefelds der Erde.

An der Wandung der Rohrleitung 18 sind ein erster Drucksensor 12 und ein zweiter Drucksensor 14 angeordnet. Die Rohrleitung 16 kann hierfür entsprechende Wanddruckbohrungen aufweisen, wobei die Ausrichtung der Drucksensoren 12, 14 derart erfolgt, dass diese lediglich statische Druckkomponenten messen können, jedoch keine dynamischen Druckkomponenten, insbesondere keinen Staudruck. Die Kontaktstellen der Drucksensoren 14, 16 mit dem Fluid, d.h. die Stellen, an denen die eigentliche Druckmessung erfolgt, werden als Messstellen bezeichnet. In den schematischen Darstellungen der Fig. 1 und 2 wird vereinfachend angenommen, dass sich die Messstellen jeweils in den Schnittbereichen der Drucksensoren 12, 14, 16 mit den inneren Wandungsflächen der Rohrleitung 18 befinden. Für die Beschreibung der Positionen der Drucksensoren 12, 14, 16 wird ferner vereinfacht angenommen, dass der Querschnitt der Rohrleitung 18 kreisförmig ist und die Längsmittelachse der Rohrleitung 18 die Bezugsachse für die Positionsangaben bildet. Wegen dieser angenommenen Rotationssymmetrie der beiden Ausführungsbeispiele sind die Abstandspositionen (als Komponenten der Polarpositionen) der Drucksensoren 12, 14, 16 gleich.

Die Drucksensoren 12, 14 befinden sich bezüglich der Längsmittelachse der Rohrleitung 18 an derselben Axialposition. Die Polarpositionen der Drucksensoren 12, 14, d.h. im vorliegenden Beispiel (wegen der bereits vorgegebenen Abstandspositionen) die Winkelpositionen (als weitere Komponenten der Polarpositionen), sind so gewählt, dass sich die Drucksensoren 12, 14 mit einem maximalen Abstand x einander gegenüberliegen, wobei sich der erste Drucksensor 12 am oberen Scheitel der Rohrleitung 18 und der zweite Drucksensor 14 am unteren Scheitel der Rohrleitung 18 befindet. Die Differenz der Winkelpositionen beträgt demnach 180°.

Die Drucksensoren 12, 14 sind mit einer Drucksensoren-Auswerteeinheit 20 verbunden, welche dazu eingerichtet ist, die von den Drucksensoren 12, 14 an den jeweiligen Messstellen gemessenen Drücke zu empfangen, aus diesen Drücken einen hydrostatischen Differenzdruck p zu ermitteln, und die Dichte $\rho$ des Fluids auf der Grundlage des ermittelten Differenzdrucks p, der im Bereich der Messstellen wirksamen Erdbeschleunigung g (9,81 m/s$^2$) und einer Höhendifferenz h zu ermitteln, welche der in Richtung des Schwerefelds der Erde verlaufenden Komponente des Abstands der genannten zwei Messstellen voneinander entspricht.

Da die Messstellen diametral einander gegenüberliegend an der Innenwandung der Rohrleitung 18 vorgesehen sind und die Rohrleitung 18 selbst waagerecht verläuft, entspricht die Höhendifferenz h dem Abstand x der Drucksensoren 12, 14 bzw. deren Messstellen und damit wiederum dem Innendurchmesser D der Rohrleitung 18. Die Dichte $\rho$ des Fluids kann insbesondere gemäß der Gleichung $\rho = \dfrac{p}{g \cdot h} = \dfrac{p}{g \cdot D}$ ermittelt werden.

Gemäß einer mit gestrichelten Linien dargestellten Abwandlung des Ausführungsbeispiels von Fig. 1 können in der Rohrleitung 18 zusätzlich zwei Ultraschallwandler 22 vorgesehen sein, zwischen denen ein Messpfad 26 aufgespannt ist. Die Ultraschallwandler 22 können wechselweise Ultraschallsignale entlang dieses Messpfads aussenden bzw. empfangen. Die Ultraschallwandler 22 sind mit der Drucksensoren-Auswerteeinheit 20 verbunden, welche bei dieser Abwandlung somit auch die Funktion einer Ultraschallwandler-Auswerteeinheit übernimmt und somit auch als gemeinsame Auswerteeinheit 20 bezeichnet werden kann.

Die gemeinsame Auswerteeinheit 20 ist dazu eingerichtet, die Laufzeiten von mit und gegen die Strömung auf dem Messpfad 26 ausgesandten und empfangenen Ultraschallsignale zu ermitteln und auf der Grundlage der Laufzeiten die Strömungsgeschwindigkeit des Fluids zu ermitteln. Auf der Grundlage der auf diese Weise ermittelten Strömungsgeschwindigkeit c, der in der vorstehend beschriebenen Weise ermittelten Dichte $\rho$ und der Querschnittsfläche A der Rohrleitung 18 kann dann der Massenstrom des Fluids ermittelt werden. Für den Massenstrom M gilt M = c · A · $\rho$.

Die vorstehend beschriebene Abwandlung stellt somit ein Ausführungsbeispiel einer Massenstrommessanordnung dar.

Mit Bezug nun auf Fig. 2 wird eine Dichtemessanordnung 110 gemäß einem weiteren Ausführungsbeispiel beschrieben. Da die Dichtemessanordnung 110 im Prinzip eine Abwandlung der Dichtemessanordnung 10 von Fig. 1 ist, sind gleiche oder gleichartige Komponenten mit den gleichen Bezugzeichen versehen. Nachfolgend werden im Wesentlichen nur die Unterschiedsmerkmale noch näher erläutert.

Die ersten und zweiten Drucksensoren 12, 14 sind in der gleichen Weise wie beim Ausführungsbeispiel gemäß Fig. 1 angeordnet. Zusätzlich ist ein dritter Drucksensor 16 vorgesehen, der mit einem Abstand y von dem zweiten Drucksensor 14 entfernt ist. Die Position der Messstelle des dritten Drucksensors 16 unterscheidet sich von der Position der Messstelle des zweiten Drucksensors 14 lediglich hinsichtlich der Axialposition bezogen auf die Längsachse der Rohrleitung. Die Polarpositionen des zweiten und des dritten Drucksensors 14, 16 bzw. zumindest deren Winkelkomponenten sind gleich.

Alle drei Drucksensoren 12, 14, 16 sind mit einer Drucksensoren-Auswerteeinheit 24 verbunden, welche in gleicher Weise wie die Drucksensoren-Auswerteeinheit bzw. gemeinsame Auswerteeinheit 20 gemäß Fig. 1 zur Bestimmung der Dichte des strömenden Fluids eingerichtet ist.

Die Rohrleitung 18 ist gegenüber der Wirkrichtung des Schwerefelds der Erde, d.h. gegenüber dem Vektor der Erdbeschleunigung g um einen Neigungswinkel α geneigt. Der Neigungswinkel α beträgt im Ausführungsbeispiel etwa 30°. Bei dieser Einbaulage ist die Höhendifferenz h zwischen dem zweiten und dem dritten Drucksensor 14, 16 am größten, d.h. größer als die Höhendifferenz zwischen dem ersten und dem zweiten Drucksensor 12, 14 und auch größer als die Höhendifferenz zwischen dem ersten und dem dritten Drucksensor 12, 16. Für die Ermittlung der Dichte werden somit lediglich die Druckmesssignale des zweiten und des dritten Drucksensors 14, 16 berücksichtigt. Die Druckmesssignale des ersten Drucksensors 12 bleiben unberücksichtigt.

Die Auswahl der jeweils zu berücksichtigenden beiden Drucksensoren kann manuell erfolgen, beispielsweise mit Hilfe einer an der Drucksensoren-Auswerteeinheit 24 vorgesehenen Eingabevorrichtung.

Gemäß einer nicht dargestellten Abwandlung kann die Drucksensoren-Auswerteeinheit 24 zusätzlich mit einem Neigungssensor verbunden sein, welcher den Neigungswinkel α ermitteln kann. Die Auswahl desjenigen Drucksensorpaares, welches die größtmögliche Höhendifferenz h aufweist, kann dann automatisiert auf der Grundlage des Neigungswinkels unter Berücksichtigung der geometrischen Anordnung der Drucksensoren 12, 14, 16 ermittelt werden, wobei die Positionen der Drucksensoren 12, 14, 16 der Drucksensoren-Auswerteeinheit 24 bekannt sein müssen.

Im vorliegenden Ausführungsbeispiel gemäß Fig. 2 gilt für die Höhendifferenz h für das Drucksensorpaar 14, 16 die Gleichung $h = y \cdot \cos \alpha$.

Im Ausführungsbeispiel sind die Abstände x und y der Drucksensoren 12, 14, 16 gleich groß. Wenn der Neigungswinkel der Rohrleitung 18 in diesem Fall mehr als 45° betragen würde, sollte sinnvollerweise zur Bestimmung der Fluiddichte nicht mehr der Differenzdruck zwischen dem zweiten und dem dritten Drucksensor 14, 16 herangezogen werden, sondern stattdessen der Differenzdruck zwischen dem ersten und dem zweiten Drucksensor 12, 14. Für diese Kombination von Drucksensoren bestimmt sich dann die Höhendifferenz h gemäß der Gleichung $h = x \cdot \sin \alpha$.

Gemäß einer weiteren, nicht dargestellten Abwandlung der Dichtemessanordnung 110 gemäß Fig. 2 können zur Verwirklichung einer Massenstrommessanordnung analog zum Ausführungsbeispiel von Fig. 1 in der Rohrleitung 18 Ultraschallwandler 22 zur Ermittlung der Strömungsgeschwindigkeit des Fluids vorgesehen sein. Die Auswertung der Ultraschallsignale zur Ermittlung der Strömungsgeschwindigkeit kann dann in entsprechender Weise mit einer gemeinsamen Auswerteeinheit oder auch mit einer separaten Ultraschallwandler-Auswerteeinheit erfolgen.

Gemäß noch einer weiteren, nicht dargestellten Abwandlung der Dichtemessanordnung 110 gemäß Fig. 2 könnte auch der erste Drucksensor 12 oder alternativ der zweite Drucksensor 14 entfallen. Eine solche Dichtemessanordnung wäre für eine nicht horizontal verlaufende Rohrleitung, insbesondere eine vertikal verlaufende Rohrleitung besonders geeignet. Da sich in der Regel der Abstand zwischen zwei Messstellen in axialer Richtung der Rohrleitung konstruktiv wesentlich einfacher erhöhen lässt als in Querrichtung, nämlich durch eine Verlängerung der Rohrleitung, lässt sich die Höhendifferenz und damit auch der zu erwartende Differenzdruck erhöhen, so dass auch die Dichte von Fluiden mit einem sehr niedrigen spezifischen Gewicht mit einer hinreichenden Messgenauigkeit ermittelt werden kann.

In allen Ausführungsbeispielen und deren Abwandlungen ist der dargestellte Abschnitt der Rohrleitung 18 nicht zwingend ein integraler Bestandteil der jeweiligen Messanordnung. Grundsätzlich ist es zwar möglich, die Komponenten der jeweiligen Messanordnungen fest in einen solchen Rohrleitungsabschnitt einzubauen, so dass dieser dann lediglich noch an der gewünschten Stelle in ein Rohrleitungssystem eingebaut werden muss. Alternativ ist es jedoch auch denkbar, dass die Komponenten einer jeweiligen Messanordnung in geeigneter Weise an einer bereits vorhandenen Rohrleitung angebracht werden, um die erfindungsgemäßen Verfahren durchzuführen.

Bezugszeichenliste

| | |
|---|---|
| 10, 110 | Dichtemessanordnung |
| 12 | erster Drucksensor |
| 14 | zweiter Drucksensor |
| 16 | dritter Drucksensor |
| 18 | Rohrleitung |
| 20 | Drucksensoren-Auswerteeinheit, gemeinsame Auswerteeinheit |
| 22 | Ultraschallwandler |
| 24 | Drucksensoren-Auswerteeinheit |
| 26 | Messpfad |

**Patentansprüche**

1. Verfahren zum Bestimmen der Dichte eines in einer Rohrleitung (18) strömenden Fluids, wobei
an zumindest zwei verschiedenen Messstellen ein jeweiliger Druck in der Rohrleitung (18) gemessen wird, wobei die Messstellen derart mit einem Abstand voneinander in der Rohrleitung (18) angeordnet sind, dass sich ein an einer der Messstellen wirksamer Schweredruck und ein an ein anderen Messstelle wirksamer Schweredruck entsprechend einer Höhendifferenz (h) zwischen den genannten zwei Messstellen voneinander unterscheiden, aus den beiden gemessenen Drücken ein hydrostatischer Differenzdruck ermittelt wird, und
die Dichte des Fluids auf der Grundlage des ermittelten Differenzdrucks, der im Bereich der Messstellen wirksamen Erdbeschleunigung und der Höhendifferenz (h) zwischen den genannten zwei Messstellen ermittelt wird.

2. Verfahren nach Anspruch 1,
**dadurch gekennzeichnet,**
**dass** das Fluid eine Flüssigkeit oder ein Gas, bevorzugt ein komprimiertes Gas ist.

3. Verfahren nach Anspruch 1 oder 2,
**dadurch gekennzeichnet,**
**dass** jede Messstelle an einer Wandungsfläche der Rohrleitung (18) vorgesehen ist und/oder
**dass** die Messungen der Drücke an den genannten zwei Messstellen derart erfolgen, dass diejenigen Druckkomponenten der gemessenen Drücke, die auf den Betriebsdruck und den dynamischen Druck in dem Fluid zurückzuführen sind, an allen Messstellen gleich groß sind.

4. Verfahren nach einem der vorhergehenden Ansprüche,
**dadurch gekennzeichnet,**
**dass** die Höhendifferenz (h) zwischen den genannten zwei Messstellen unter Berücksichtigung der Neigung (a) der Rohrleitung (18) ermittelt wird.

5. Verfahren nach Anspruch 4,
**dadurch gekennzeichnet,**
**dass** die Höhendifferenz (h) zwischen den genannten zwei Messstellen ferner auf der Grundlage der für eine Referenzneigung der Rohrleitung (18) ermittelten Referenzhöhendifferenz und einer Winkeldifferenz zwischen der Referenzneigung und der tatsächlichen Neigung (a) der Rohrleitung (18) ermittelt wird.

6. Dichtemessanordnung (10, 110) zum Bestimmen der Dichte eines in einer Rohrleitung (18) strömenden Fluids, mit
zumindest zwei an verschiedenen Messstellen der Rohrleitung (18) angeordneten Drucksensoren (12, 14, 16) zur Druckmessung in der Rohrleitung (18), wobei die Messstellen derart mit einem Abstand voneinander in der Rohrleitung (18) vorgesehen sind, dass sich ein an einer der Messstellen wirksamer Schweredruck und ein an einer anderen Messstelle wirksamer Schweredruck entsprechend einer Höhendifferenz (h) voneinander unterscheiden, welche der in Wirkrichtung der Erdbeschleunigung verlaufenden Komponente des Abstands der genannten zwei Messstellen voneinander entspricht, und einer mit den Drucksensoren (12, 14, 16) verbundenen Drucksensoren-Auswerteeinheit (20, 24), welche dazu eingerichtet ist, die von den Drucksensoren (12, 14, 16) an den beiden genannten Messstellen gemessenen Drücke zu empfangen und aus diesen Drücken einen hydrostatischen Differenzdruck zu ermitteln, und
die Dichte des Fluids auf der Grundlage des ermittelten Differenzdrucks, der im Bereich der Messstellen wirksamen Erdbeschleunigung und der Höhendifferenz (h) zwischen den genannten zwei Messstellen zu ermitteln.

7. Dichtemessanordnung (10, 110) nach Anspruch 6,
**dadurch gekennzeichnet,**
**dass** die Dichtemessanordnung (10, 110) drei an verschiedenen Messstellen angeordnete Drucksensoren (12, 14, 16) zur Druckmessung in der Rohrleitung (18) umfasst, wobei die Messstellen derart gewählt sind, dass für jede beliebige Neigung der Rohrleitung (18) bezogen auf die in Wirkrichtung der Erdbeschleunigung für wenigstens ein mögliches Paar von Messstellen die Höhendifferenz (h) ungleich Null ist.

8. Dichtemessanordnung (10, 110) nach Anspruch 7,
**dadurch gekennzeichnet,**
**dass** die Bestimmung der Dichte nur auf der Grundlage derjenigen Drücke durchgeführt wird, die an demjenigen Paar von Messstellen ermittelt wurden, welches die größte Höhendifferenz (h) aufweist.

9. Dichtemessanordnung (10, 110) nach einem der Ansprüche 6 bis 8,
**dadurch gekennzeichnet,**
**dass** die Position einer jeden Messstelle in der Rohrleitung (18) durch eine Axialposition und eine Polarposition bezogen auf eine Längsachse der Rohrleitung (18) definiert ist, und
**dass** die Dichtemessanordnung (10, 110) einen ersten und einen zweiten Drucksensor (12, 14) umfasst, wobei die Axialpositionen der Messstellen des ersten und zweiten Drucksensors (12, 14) gleich sind und die Polarpositionen der Messstellen des ersten und zweiten Drucksensors (12, 14) derart gewählt sind, dass deren Höhendifferenz (h) maximal ist.

10. Dichtemessanordnung (10, 110) nach Anspruch 9,
**dadurch gekennzeichnet,**
**dass** die Dichtemessanordnung (10, 110) ferner einen dritten Drucksensor (16) umfasst, wobei die Axialposition der Messstelle des dritten Drucksensors (16) von der Axialposition der Messstellen des ersten und zweiten Drucksensors (12, 14) verschieden ist und die Polarposition der Messstelle des dritten Drucksensors (16) gleich der Polarposition der Messstelle des ersten oder des zweiten Drucksensors (12, 14) ist.

11. Dichtemessanordnung (10, 110) nach Anspruch 10,
**dadurch gekennzeichnet,**
**dass** der axiale Abstand zwischen der Axialposition der Messstelle des dritten Drucksensors (16) und der Axialposition der Messstellen des ersten und zweiten Drucksensors (12, 14) gleich dem Abstand der Messstellen des ersten und zweiten Drucksensors (12, 14) ist.

12. Dichtemessanordnung (10, 110) nach einem der Ansprüche 6 bis 11,
**dadurch gekennzeichnet,**
**dass** die Drucksensoren-Auswerteeinheit (20, 24) zur Durchführung des Verfahrens nach einem der Ansprüche 1 bis 5 eingerichtet ist.

13. Verfahren zum Bestimmen des Massenstroms eines in einer Rohrleitung (18) strömenden Fluids, wobei Laufzeiten von mit und gegen die Strömung auf wenigstens einem Messpfad (26) ausgesandten und empfangenen Ultraschallsignalen ermittelt werden,
wobei auf der Grundlage der Laufzeiten die Strömungsgeschwindigkeit des Fluids ermittelt wird,
wobei mit einem Verfahren nach einem der Ansprüche 1 bis 5 die Dichte des Fluids ermittelt wird,
und wobei auf der Grundlage der Strömungsgeschwindigkeit, der Dichte und der Querschnittsfläche der Rohrleitung (18) der Massenstrom ermittelt wird.

14. Massenstrommessanordnung zum Bestimmen des Massenstroms eines in einer Rohrleitung (18) strömenden Fluids,
mit einer Dichtemessanordnung (10, 110) nach einem der Ansprüche 6 bis 12,
mit zumindest einer Ultraschallmessanordnung mit einem Paar von Ultraschallwandlern (22), welche zum Aussenden und Empfangen von Ultraschallsignalen eingerichtet sind und zwischen denen ein Messpfad (26) aufgespannt ist,
mit einer Ultraschallwandler-Auswerteeinheit, welche dazu eingerichtet ist, Laufzeiten von mit und gegen die Strömung auf dem Messpfad (26) ausgesandten und empfangenen Ultraschallsignalen zu ermitteln, auf der Grundlage der Laufzeiten die Strömungsgeschwindigkeit des Fluids zu ermitteln,

- wobei die Drucksensoren-Auswerteeinheit (20, 24) dazu eingerichtet ist, die ermittelte Strömungsgeschwindigkeit von der Ultraschallwandler-Auswerteeinheit zu empfangen und auf der Grundlage der Strömungsgeschwindigkeit, der Dichte und der Querschnittsfläche der Rohrleitung (18) den Massenstrom zu ermitteln, oder
- wobei die Ultraschallwandler-Auswerteeinheit dazu eingerichtet ist, die ermittelte Dichte von der Drucksensoren-Auswerteeinheit (20, 24) zu empfangen und auf der Grundlage der Strömungsgeschwindigkeit, der Dichte und der Querschnittsfläche der Rohrleitung (18) den Massenstrom zu ermitteln.

15. Massenstrommessanordnung nach Anspruch 14,
**dadurch gekennzeichnet,**

**dass** die Ultraschallwandler-Auswerteeinheit und die Drucksensoren-Auswerteeinheit in einer gemeinsamen Auswerteeinheit (20) kombiniert sind.

Fig.1

Fig.2

Europäisches Patentamt

European Patent Office

Office européen des brevets

## EUROPÄISCHER RECHERCHENBERICHT

Nummer der Anmeldung

EP 19 21 5079

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 066 499 A1 (ASPECT IMAGING LTD [IL]) 14. September 2016 (2016-09-14) | 1,2,6, 12-14 | INV. G01N9/26 |
| Y | * Absätze [0033], [0037]; Abbildung 1 * | 13-15 | G01F1/66 |
| | ----- | | |
| X | US 2004/139791 A1 (JOHANSEN ESPEN S [US]) 22. Juli 2004 (2004-07-22) | 1,2,4-6, 12 | |
| Y | * Absätze [0032] - [0036] * * Absätze [0054] - [0058]; Abbildungen 2A, 2B, 2C, 2D * | 7,8,10, 11,13-15 | |
| | ----- | | |
| X | CN 1 068 193 A (LIAOHE PETROLEUM SCHOOL [CN]) 20. Januar 1993 (1993-01-20) | 1-3,6,9, 12 | |
| Y | * Seite 2, Zeile 1 - Seite 4, Zeile 16; Abbildungen 1, 3 * | 7,8,10, 11,13-15 | |
| | ----- | | |
| Y | US 2016/187172 A1 (GOTTLIEB EMANUEL J [US]) 30. Juni 2016 (2016-06-30) | 13-15 | |
| A | * Absatz [0033] * * Absätze [0041] - [0042]; Abbildung 1 * | 1-12 | |
| | ----- | | |

**RECHERCHIERTE SACHGEBIETE (IPC)**

G01N
G01F

Der vorliegende Recherchenbericht wurde für alle Patentansprüche erstellt

| Recherchenort | Abschlußdatum der Recherche | Prüfer |
|---|---|---|
| Den Haag | 8. Juni 2020 | Tomasoni, Flora |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 21 5079

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-06-2020

| Im Recherchenbericht angeführtes Patentdokument | Datum der Veröffentlichung | Mitglied(er) der Patentfamilie | Datum der Veröffentlichung |
|---|---|---|---|
| EP 3066499 A1 | 14-09-2016 | DE 202014105273 U1<br>EP 3066499 A1<br>US 2015122016 A1<br>US 2017097293 A1<br>WO 2015068154 A1 | 24-11-2014<br>14-09-2016<br>07-05-2015<br>06-04-2017<br>14-05-2015 |
| US 2004139791 A1 | 22-07-2004 | CA 2455250 A1<br>GB 2397892 A<br>US 2004139791 A1<br>US 2005268702 A1 | 21-07-2004<br>04-08-2004<br>22-07-2004<br>08-12-2005 |
| CN 1068193 A | 20-01-1993 | KEINE | |
| US 2016187172 A1 | 30-06-2016 | CA 2972625 A1<br>GB 2548765 A<br>US 2016187172 A1<br>WO 2016109073 A1 | 07-07-2016<br>27-09-2017<br>30-06-2016<br>07-07-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016112295 A1